(19) Europäisches Patentamt / European Patent Office / Office européen des brevets

(11) **EP 2 608 346 B1**

(12) **FASCICULE DE BREVET EUROPEEN**

(45) Date de publication et mention
de la délivrance du brevet:
**26.04.2017 Bulletin 2017/17**

(21) Numéro de dépôt: **12198259.9**

(22) Date de dépôt: **19.12.2012**

(51) Int Cl.:
*H02J 1/10* *(2006.01)*    *H02J 9/06* *(2006.01)*

(54) **Système d'alimentation à sélection de réseau priorisé.**

Zufuhrsystem mit Auswahl des priorisierten Netzes

Power supply system with prioritised network selection

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.12.2011 FR 1104093**

(43) Date de publication de la demande:
**26.06.2013 Bulletin 2013/26**

(73) Titulaire: **Thales
92200 Neuilly Sur Seine (FR)**

(72) Inventeurs:
• **Taurand, Christophe
26027 VALENCE CEDEX (FR)**

• **Bretez, Arnaud
26027 VALENCE CEDEX (FR)**

(74) Mandataire: **Lavoix
2, place d'Estienne d'Orves
75441 Paris Cedex 09 (FR)**

(56) Documents cités:
| | |
|---|---|
| EP-A1- 2 354 864 | EP-A2- 2 363 940 |
| WO-A2-97/21265 | FR-A1- 2 815 789 |
| GB-A- 2 448 062 | US-A- 5 216 286 |
| US-A1- 2008 150 356 | |

**Description**

La présente invention concerne un système d'alimentation propre à délivrer en sortie une tension de sortie continue et à être raccordé en entrée à N réseaux d'alimentation distincts délivrant chacun une tension d'entrée, N étant un nombre entier supérieur ou égal à 2, du type comportant :

- N organes commandables de transfert d'énergie, chacun étant propre à commuter entre une position ouverte et une position fermée et étant connecté à un réseau d'alimentation correspondant,
- des moyens de commande de chacun des organes commandables de transfert d'énergie pour la sélection d'un réseau d'alimentation parmi les N réseaux d'alimentation via la commande en position fermée de l'organe commandable de transfert d'énergie connecté au réseau d'alimentation sélectionné et la commande en position ouverte des N-1 autre(s) organe(s) commandables de transfert de puissance, et
- des moyens de stockage d'énergie propres à délivrer une tension de stockage.

L'invention se situe dans le domaine des systèmes d'alimentation d'équipements électroniques à partir de plusieurs réseaux d'alimentation distincts. De tels systèmes d'alimentation sont fréquemment utilisés notamment en aéronautique, pour l'alimentation d'équipements électroniques de type cabinets avioniques, modules de données de vols, etc.

Le document FR 2 815 789 A1 décrit un système d'alimentation du type précité. Le système d'alimentation comprend une batterie de condensateurs formant les moyens de stockage d'énergie, ainsi qu'un aiguillage à diodes pour la sélection d'un réseau d'alimentation parmi les N réseaux.

Le système d'alimentation est propre à sélectionner un réseau d'alimentation parmi les réseaux auxquels il est raccordé. Il est propre à commuter vers un réseau redondant lorsque la tension délivrée par un adaptateur associé au réseau d'alimentation sélectionné est inférieure à un seuil donné.

Ceci permet de commuter vers un réseau d'alimentation redondant lors de microcoupures ou de disparitions de tension sur le réseau sélectionné. La présence des moyens de stockage d'énergie limite alors l'impact de telles microcoupures ou disparitions sur la tension de sortie du système.

La sélection entre les réseaux d'alimentation est réalisée suivant un ordre de priorité déterminé en fonction de seuils de tension prédéterminés associés aux tensions de sortie des organes commandables de transfert d'énergie.

Toutefois, dans un contexte d'augmentation de la dynamique des réseaux d'alimentation en aéronautique, lors de disparitions ou de microcoupures survenant sur le réseau sélectionné, le système d'alimentation commande le basculement entre les réseaux dès le franchissement du seuil de tension associé, même si cela n'est pas strictement nécessaire. Ceci tend à fatiguer inutilement les différents organes du système d'alimentation et à diminuer leur durée de vie, ainsi qu'à créer des instabilités et des perturbations des réseaux d'alimentation à cause des commutations intempestives, ce qui est particulièrement contraignant lorsque le système d'alimentation est embarqué à bord d'un aéronef.

L'objectif de la présente invention est donc de limiter le nombre de basculements entre les réseaux. Cet objectif est atteint par le système d'alimentation tel que défini dans la revendication 1. Des modes de réalisation de l'invention sont définis dans les revendications dépendantes. Ainsi, l'invention concerne un système d'alimentation du type précité, caractérisé en ce qu'il comprend en outre un convertisseur d'énergie connecté en sortie des N organes commandables de transfert d'énergie, les moyens de commande étant propres à commander le convertisseur d'énergie et les N organes commandables de transfert d'énergie pour la sélection d'au plus une source d'énergie parmi les N réseaux d'alimentation, en fonction des N tensions d'entrée et de la tension de stockage.

Selon d'autres aspects avantageux, l'invention comprend une ou plusieurs des caractéristiques suivantes, prise(s) isolément ou selon toute(s) combinaison(s) techniquement possible(s) :

- les moyens de stockage d'énergie présentent une capacité maximale de stockage, les réseaux d'alimentation sont ordonnés suivant des niveaux d'énergie croissants, chaque niveau d'énergie étant prédéterminé et associé à un réseau d'alimentation correspondant et présentant une valeur positive inférieure à la capacité maximale de stockage, et les moyens de commande sont propres à sélectionner de manière prioritaire le réseau d'alimentation associé au niveau d'énergie le plus élevé ;
- des seuils de tension sont respectivement associés aux réseaux d'alimentation, les moyens de commande étant propres à commander le basculement d'un premier réseau d'alimentation vers un second réseau d'alimentation uniquement si ledit deuxième réseau d'alimentation présente une tension d'entrée supérieure au seuil de tension correspondant ;
- la différence entre deux niveaux d'énergie successifs correspond à l'énergie fournie par les moyens de stockage d'énergie au convertisseur d'énergie lors de la disparition, pendant une durée de transparence propre à chaque réseau d'alimentation, de la tension d'entrée du réseau d'alimentation de niveau d'énergie associé le plus faible desdits deux niveaux d'énergie ;
- les moyens de commande sont propres à commander le basculement d'un premier réseau d'alimentation, dont la durée de transparence est supérieure à une durée de temporisation prédéterminée, à un second réseau d'alimentation lors d'une disparition de la tension d'entrée du premier réseau d'alimentation pour une durée supérieure à la durée de temporisation ;

- la tension de stockage est représentative d'une quantité d'énergie des moyens de stockage d'énergie, et les moyens de commande sont propres à commander le basculement d'un premier réseau d'alimentation à un deuxième réseau d'alimentation de niveau d'énergie associé inférieur, lors d'une disparition de la tension d'entrée dudit premier réseau d'alimentation, uniquement si la quantité d'énergie des moyens de stockage d'énergie est inférieure au niveau d'énergie associé audit premier réseau d'alimentation ;
- les moyens de commande sont propres à commander le basculement d'un premier réseau d'alimentation à un second réseau d'alimentation de niveau d'énergie supérieur uniquement si la quantité d'énergie des moyens de stockage d'énergie est égale à la capacité maximale de stockage ;
- les moyens de commande sont propres à commander la sélection d'aucune source d'énergie via la commande de tous les organes commandables de transfert d'énergie en position ouverte ;
- les moyens de stockage d'énergie présentent une capacité maximale de stockage, les moyens de commande étant propres à inhiber le basculement d'un premier réseau d'alimentation, vers lequel le basculement a été commandé depuis la sélection d'aucune source d'énergie, vers un second réseau d'alimentation tant que la quantité d'énergie des moyens de stockage d'énergie n'est pas égale à la capacité maximale de stockage ;
- le système d'alimentation comprend également une ligne d'alimentation commune présentant une tension de sélection, les organes commandables de transfert d'énergie sont raccordés à la ligne d'alimentation commune, et les moyens de commande sont propres à commander le convertisseur d'énergie et les N organes commandables de transfert d'énergie pour la sélection d'au plus une source d'énergie parmi les N réseaux d'alimentation, en fonction des N tensions d'entrée, de la tension de stockage, de tensions intermédiaires délivrées par les organes commandables de transfert d'énergie et de la tension de sélection ;
- les moyens de commande sont propres à commander le basculement vers un état sécurisé du réseau d'alimentation dans lequel les organes commandables de transfert d'énergie sont tous commandés en position ouverte, leur commande en position fermée étant inhibée ;
- les moyens de commande sont propres à commander le basculement depuis la sélection d'aucune source d'énergie vers l'état sécurisé si au moins une tension intermédiaire est non nulle ;
- des seuils de tension sont respectivement associés aux réseaux d'alimentation, les moyens de commutation/sélection étant propres à commander le basculement d'un réseau d'alimentation vers l'état sécurisé si au moins un organe commandable de transfert d'énergie autre que l'organe commandable de transfert de puissance associé audit réseau d'alimentation présente une tension intermédiaire non nulle ou si la tension de sélection est nulle alors que la tension d'entrée dudit réseau d'alimentation est supérieure au seuil de tension associé ; et

- le système d'alimentation comprend également une ligne d'alimentation commune à laquelle sont raccordés les organes commandables de transfert d'énergie, et le système d'alimentation comprend N diodes unidirectionnelles connectées respectivement entre la sortie d'un organe commandable de transfert d'énergie donné et la ligne d'alimentation commune.

L'invention sera mieux comprise à la lecture de la description qui va suivre, donnée uniquement à titre d'exemple, et faite en référence aux dessins annexés, sur lesquels :

- la Figure 1 est une représentation schématique illustrant un système d'alimentation comprenant des moyens de stockage d'énergie selon un premier mode de réalisation de l'invention ;
- la Figure 2 est une représentation schématique d'une échelle de niveaux d'énergie des moyens de stockage d'énergie selon le premier mode de réalisation de l'invention ;
- la Figure 3 est un diagramme d'états de fonctionnement du système d'alimentation de la Figure 1 ;
- la Figure 4 est une vue analogue à celle de la Figure 1 selon un deuxième mode de réalisation de l'invention ;
- la Figure 5 est une vue analogue à celle de la Figure 3 selon le deuxième mode de réalisation de l'invention ;
- la Figure 6 est une représentation d'une diode unidirectionnelle selon un troisième mode de réalisation ;
- la Figure 7 est une vue analogue à celle de la Figure 6 selon un quatrième mode de réalisation de l'invention; et
- la Figure 8 est une vue analogue à celle de la Figure 1 selon un cinquième mode de réalisation de l'invention.

Dans tout ce qui suit, les indices i, j, k, etc. sont utilisés de façon non limitative et leur contexte d'utilisation sera rendu explicite.

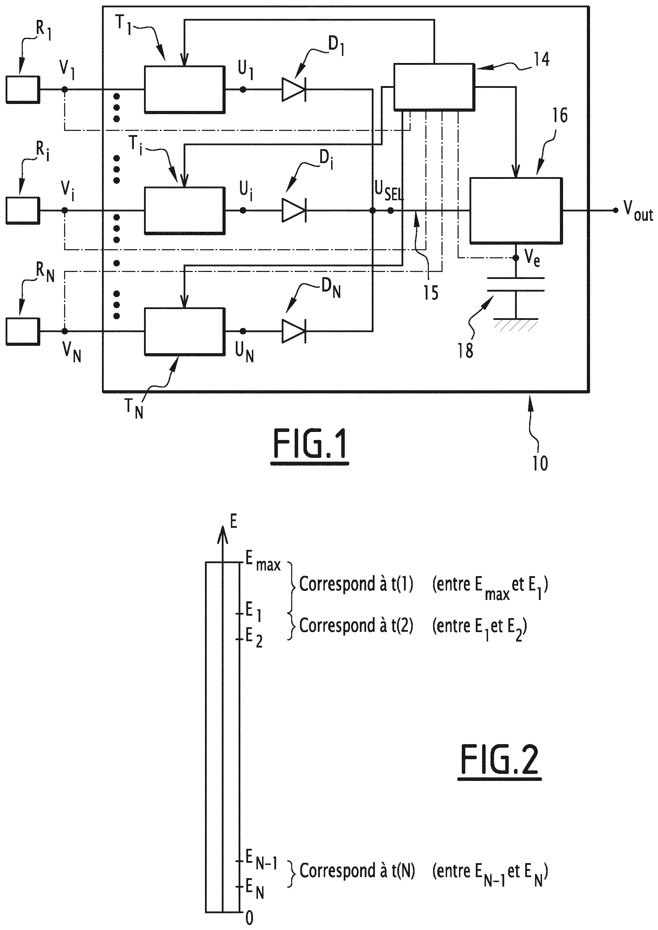

En référence à la Figure 1, un système d'alimentation 10 destiné à être embarqué à bord d'un aéronef est propre à être raccordé en entrée à N réseaux d'alimentation distincts $R_1$, ..., $R_N$, N étant un nombre entier supérieur ou égal à 2, chaque réseau d'alimenta-

tion $R_i$ délivrant une tension d'entrée $V_i$, i étant un nombre entier positif compris entre 1 et N.

Le système d'alimentation 10 est propre à sélectionner au plus l'un de ces réseaux d'alimentation $R_1$, ..., $R_N$ en tant que source d'énergie du système d'alimentation 10. Il est propre à commander le basculement d'un réseau d'alimentation $R_i$ donné vers un autre réseau $R_j$ selon une logique de basculement, également appelée logique de sélection dans ce qui suit, et détaillée ci-après, j étant un nombre entier compris entre 1 et N et différent de i, et les autres réseaux d'alimentation $R_1$, ..., $R_N$ étant inutilisés.

Enfin, le système 10 est propre à être raccordé en sortie à des charges, telles que des équipements électroniques afin de leur délivrer une tension de sortie $V_{out}$ continue à partir de la tension d'entrée $V_i$ délivrée par le réseau d'alimentation $R_i$ sélectionné. La tension de sortie $V_{out}$ est de préférence régulée.

Le système d'alimentation 10 comprend N organes commandables de transfert d'énergie $T_1$, ..., $T_N$, également appelés organes commandables de transfert de puissance $T_1$, ..., $T_N$ ou organes commandables $T_1$, ..., $T_N$, et des moyens de commande 14 desdits organes $T_1$, ..., $T_N$. En outre, il comprend une ligne d'alimentation commune 15, un convertisseur d'énergie 16 et des moyens de stockage d'énergie 18. Il comprend N diodes unidirectionnelles $D_1$, .... $D_N$ connectées entre les organes commandables $T_1$, ..., $T_N$ et la ligne commune 15.

De manière connue, chaque réseau d'alimentation $R_i$ délivre une tension d'entrée $V_i$ continue ou alternative, par exemple issue d'un alternateur, ou encore issue d'une batterie, par exemple de tension nominale égale à +28V.

Les N organes commandables $T_1$, ..., $T_N$ sont propres à transférer l'énergie électrique délivrée par les réseaux d'alimentation $R_1$, ..., $R_N$ au système d'alimentation 10, ou au contraire à inhiber le transfert de cette énergie électrique audit système d'alimentation.

Chaque organe commandable $T_i$ est raccordé à un réseau d'alimentation $R_i$ correspondant et est propre à commuter entre une position ouverte et une position fermée. Chaque organe commandable $T_i$ est destiné à être commandé en position ouverte ou fermée par les moyens de commande 14.

La sortie de chaque organe commandable $T_1$, ..., $T_N$ est raccordée à la ligne d'alimentation commune 15, celle-ci présentant une tension de sélection $U_{SEL}$. La tension de sélection $U_{SEL}$ est une tension continue.

Chaque organe commandable $T_i$ est propre à recevoir la tension d'entrée $V_i$ fournie par le réseau d'alimentation $R_i$ correspondant et à délivrer une tension intermédiaire $U_i$.

Chaque tension intermédiaire $U_i$ est une tension continue, l'organe commandable $T_i$ comportant un convertisseur de tension alternative en tension continue lorsque le réseau d'alimentation $R_i$ correspondant est un réseau alternatif.

En fonctionnement nominal du système d'alimentation 10, la tension de sélection $U_{SEL}$ de la ligne d'alimentation commune 15 est égale à la tension intermédiaire $U_i$ correspondant au réseau $R_i$ sélectionné.

De manière connue, chaque organe $T_i$ comprend :

- un ou plusieurs interrupteurs électromécaniques de type relais, ou statiques de type MOSFET (de l'anglais Metal Oxide Semiconductor Field Effect Transistor) ou IGBT (de l'anglais Insulated Gate Bipolar Transistor), ou
- un convertisseur de puissance isolé monodirectionnel, ou
- un convertisseur de puissance non isolé monodirectionnel, ou
- un convertisseur de puissance isolé bidirectionnel, ou
- un convertisseur de puissance non isolé bidirectionnel.

Le convertisseur d'énergie 16 est propre à permettre le transfert d'énergie électrique depuis les réseaux d'alimentation $R_1$, ..., $R_N$ vers les moyens de stockage d'énergie 18 et vers les équipements électroniques auxquels le système d'alimentation 10 est raccordé en sortie. En outre, il est adapté pour réguler la tension de sortie $V_{out}$ à une tension prescrite à partir d'une tension de stockage $V_e$ délivrée par les moyens de stockage d'énergie 18 et de la tension de sélection $U_{SEL}$ de la ligne d'alimentation commune 15.

Le convertisseur d'énergie 16 est raccordé en entrée à la ligne d'alimentation commune 15 et délivre la tension de sortie $V_{out}$.

Le convertisseur 16 est de manière connue un convertisseur isolé. En variante, le convertisseur 16 est un convertisseur non isolé. En variante encore, le convertisseur 16 est un convertisseur monodirectionnel. En variante, le convertisseur 16 est un convertisseur bidirectionnel.

Les moyens de stockage d'énergie 18 sont alors raccordés à la ligne d'alimentation 15 via le convertisseur d'énergie 16.

Les moyens de stockage d'énergie 18 sont propres à limiter l'impact, sur la tension de sortie $V_{out}$, de disparitions de la tension $V_i$ survenant sur le réseau d'alimentation $R_i$ sélectionné.

Les moyens de stockage 18 sont propres à stocker de l'énergie électrique issue des réseaux d'alimentation $R_1$, ..., $R_N$ via le convertisseur d'énergie 16 ou à restituer l'énergie électrique stockée au convertisseur 16.

Les moyens de stockage d'énergie 18 comprennent de manière connue un condensateur électrochimique aluminium, et/ou une ou plusieurs batteries, et/ou des dispositifs supercapacitifs.

Les moyens de stockage d'énergie 18 présentent une capacité maximale de stockage d'énergie $E_{max}$.

La tension de stockage $V_e$ délivrée par les moyens de stockage d'énergie 18 au convertisseur d'énergie 16 est représentative d'une quantité d'énergie E stockée dans lesdits moyens 18.

En variante, lorsque les organes commandables $T_i$ présentent une tension intermédiaire $U_i$ proche de la tension de stockage $V_e$ , ce qui est par exemple le cas lorsque les organes commandables $T_i$ réalisent une conversion d'énergie, les moyens de stockage d'énergie 18 sont placés directement sur la ligne d'alimentation commune 15 et le convertisseur 16 est supprimé.

En référence à la Figure 2, les réseaux d'alimentation $R_1$, ..., $R_N$ sont ordonnés suivant des niveaux d'énergie décroissants $E_1$, ..., $E_N$, chaque niveau d'énergie $E_1$, ..., $E_N$ , étant prédéterminé, associé à un réseau d'alimentation $R_1$, ..., $R_N$ correspondant et présentant une valeur positive inférieure à la capacité maximale de stockage d'énergie $E_{max}$. Les moyens de commande 14 sont propres à sélectionner de manière prioritaire le réseau d'alimentation $R_1$ ..., $R_N$ associé au niveau d'énergie $E_1$ ..., $E_N$ le plus élevé.

La différence entre deux niveaux d'énergie prédéterminés successifs $E_{u-1}$ et $E_u$ ,u étant un nombre entier compris entre 1 et N, $E_0$ correspondant à $E_{max}$, correspond à l'énergie fournie par les moyens de stockage d'énergie 18 au convertisseur d'énergie 16 afin de compenser la disparition pour une durée t(u) de la tension $V_u$ délivrée par le réseau d'alimentation $R_u$ sélectionné de plus faible niveau d'énergie $E_u$ parmi lesdits deux réseaux $R_{u-1}$ et $R_u$. La durée t(u) est également appelée transparence du réseau d'alimentation $R_u$, et est prédéterminée de façon spécifique pour chaque réseau d'alimentation $R_u$ .Cette durée t(u) correspond à l'intervalle de temps intervenant entre la disparition du réseau $R_{u-1}$ et le basculement vers le réseau d'alimentation $R_u$. Cette transparence t(u) est prédéterminée pour une puissance de sortie du système d'alimentation 10 connue et un temps de coupure maximal à tenir. Le temps de coupure maximal est par exemple défini par une norme.

Chaque diode unidirectionnelle $D_i$ associée à un réseau d'alimentation $R_i$ donné est disposée de façon à être passante dans le sens d'un transfert d'énergie depuis le réseau d'alimentation $R_i$ vers le convertisseur d'énergie 16 et à être bloquée en sens inverse lorsque le réseau d'alimentation $R_i$ n'est pas sélectionné.

Les diodes $D_1$ permettent d'éviter un transfert d'énergie entre les réseaux d'alimentation $R_1$, ..., $R_N$.

En variante, chaque diode unidirectionnelle $D_i$ est associée à un interrupteur propre à réduire les pertes de la diode unidirectionnelle $D_i$ lorsque le réseau d'alimentation $R_i$ correspondant est sélectionné. Pour ce faire, l'interrupteur est alors fermé sur la diode unidirectionnelle $D_i$.

Les moyens de commande 14 sont propres à commander le convertisseur d'énergie 16 pour la régulation de la tension de stockage $V_e$ et à commander les organes commandables $T_1$, ..., $T_N$ en position ouverte ou fermée pour la sélection d'au plus une source d'énergie parmi les N réseaux d'alimentation $R_1$, ..., $R_N$ , en fonction des tensions d'entrée $V_1$, ..., $V_N$ et de la tension de stockage $V_e$.

Pour la sélection du réseau d'alimentation $R_i$, les moyens de commande 14 sont propres à commander l'organe commandable $T_i$ correspondant en position fermée de sorte que ledit organe $T_i$ communique l'énergie électrique délivrée par ledit réseau d'alimentation $R_i$ à la ligne commune 15. Les moyens de commande 14 sont propres à commander les autres organes commandables $T_k$ , pour k entier compris entre 1 et N et différent de i, en position ouverte de sorte que les autres réseaux d'alimentation $R_k$ correspondants ne sont alors pas utilisés par le système d'alimentation 10.

Les moyens de commande 14 comprennent par exemple des circuits logiques programmables, non représentés, de type microcontrôleur ou de type FPGA, (de l'anglais Field-Programmable Gate Array), propres à implémenter la logique de basculement entre les N réseaux d'alimentation $R_1$, ..., $R_N$ pour la sélection d'au plus une source d'énergie. En complément, ils comprennent des comparateurs de tension propres à détecter le franchissement de seuils de tension $S_1$, ..., $S_N$ associés aux tensions d'entrée $V_1$, ..., $V_N$, comme décrit ci-après. Les valeurs des seuils de tension $S_1$, ..., $S_N$ sont prédéterminées en fonction de critères tels que par exemple la tension minimale admissible de fonctionnement des organes commandables $T_1$, ..., $T_N$ et/ou la tension minimale de démarrage autorisée sur les réseaux d'alimentation $R_1$; ..., $R_N$.

Les moyens de commande 14 sont également propres à commander le basculement d'un premier réseau d'alimentation $R_1$, ..., $R_N$ vers un second réseau d'alimentation $R_1$, ..., $R_N$ uniquement si le deuxième réseau d'alimentation $R_1$, ..., $R_N$ présente une tension d'entrée $V_1$, ..., $V_N$ supérieure au seuil de tension $S_1$, ..., $S_N$ correspondant.

En outre, lorsque la tension d'entrée $V_u$ du réseau d'alimentation sélectionné $R_u$ disparaît pour une durée supérieure à la transparence t(u) de ce réseau d'alimentation, les moyens de commande 14 sont alors propres à commander le basculement vers un réseau d'alimentation redondant en fonction de la logique de basculement détaillée ci-après.

La logique de basculement entre les réseaux d'alimentation $R_1$, ..., $R_N$ à l'aide des moyens de commande 14 implémente une machine d'état comportant N+1 états F(0), F(1), ..., F(N) distincts, représentatifs des états possibles du système d'alimentation 10, à savoir :

- un état F(0) correspondant à la sélection d'aucune source d'énergie par les moyens de commande 14,
- N états F(i), dans lesquels le réseau d'alimentation $R_i$ correspondant est sélectionné comme source d'énergie, et les autres réseaux d'alimentation ne sont alors pas utilisés, i étant un nombre entier compris entre 1 et N.

Les moyens de commande 14 commandent l'ouverture ou la fermeture des organes commandables $T_i$ correspondants en vue du passage d'un état F(x) à un état F(y) en fonction des tensions d'entrée $V_1$, ..., $V_N$, ainsi que de la quantité d'énergie E stockée dans lesdits moyens de stockage d'énergie 18, pour tout x et y entiers compris entre 0 et N et différents l'un de l'autre.

Le fonctionnement et la logique de basculement des moyens de commande 14 vont être décrits plus en détail ci-après.

Initialement, le système d'alimentation 10 se trouve dans l'état F(0).

Le système d'alimentation 10 est alors propre à quitter cet état F(0) pour un état F(i), i entier compris entre 1 et N, seulement si la condition $V_i > S_i$ est vérifiée par au moins l'un des réseaux d'alimentation $R_i$. Si plusieurs réseaux d'alimentation vérifient la condition précédente, le réseau d'alimentation $R_i$ sélectionné est celui ayant le plus petit indice i.

Si la valeur de la quantité d'énergie E devient inférieure au plus petit niveau d'énergie $E_N$, les moyens de commande 14 commandent tous les organes commandable $T_1$, ..., $T_N$ en position ouverte afin de ne sélectionner aucune source d'énergie, le système d'alimentation 10 repasse alors dans l'état F(0).

Ceci se produit notamment lorsque la tension $V_i$ du réseau d'alimentation $R_i$ sélectionné ne vérifie pas la condition $V_i > S_i$ et qu'aucun réseau d'alimentation de niveau d'énergie inférieur ne vérifie lui-même cette condition. Les moyens de stockage d'énergie 18 se déchargent alors jusqu'à ce que la quantité d'énergie E soit inférieure au plus petit niveau d'énergie $E_N$.

La sélection d'un réseau d'alimentation $R_j$ de niveau d'énergie $E_j$ supérieur au niveau d'énergie $E_i$ est alors possible depuis l'état F(0).

Après un basculement de l'état F(0) vers un état F(s), s étant un entier compris entre 1 et N, le passage à un autre état F(k), k étant un entier compris entre 1 et N et différent de s, n'est autorisé par les moyens de commande 14 qu'une fois que la condition E = $E_{max}$ est vérifiée. En d'autres termes, après le basculement depuis la sélection d'aucune source d'énergie vers un premier réseau d'alimentation $R_S$, les moyens de commande 14 sont propres à inhiber le basculement vers un second réseau d'alimentation $R_k$ tant que la quantité d'énergie E des moyens de stockage d'énergie 18 n'a pas atteint la capacité maximale de stockage $E_{max}$.

Ceci permet d'éviter la désactivation du réseau d'alimentation prioritaire lorsque celui-ci est fortement perturbé, par exemple lorsqu'il présente de nombreuses disparitions de sa tension d'entrée. Les moyens de commande 14 ne commandent alors le basculement vers un autre réseau d'alimentation $R_1$, ..., $R_N$, que lorsque les multi-coupures successives ont déchargé les moyens de stockage d'énergie 18.

Pour un réseau d'alimentation $R_i$ donné, le temps cumulé des microcoupures que ledit réseau d'alimentation est propre à tenir sans que les moyens de commande 14 ne commandent le basculement vers un autre réseau d'alimentation $R_1$, ..., $R_N$ est alors du même ordre de grandeur que la transparence t(i).

Le laps de temps, entre le passage de l'état F(0) à un état F(s) et l'instant où la condition E = $E_{max}$ est vérifiée, est appelé démarrage du système d'alimentation 10.

Pour ce faire, les moyens de commande 14 génèrent un signal d'état ON, lequel est validé une fois que la quantité d'énergie E a atteint la capacité maximale de stockage $E_{max}$, et invalidé lorsque la quantité d'énergie E devient inférieure au plus petit niveau d'énergie $E_N$. La condition logique associée à la génération de ce signal d'état s'écrit donc :

$$ON = (ON + (E = E_{max})) \& (E > E_N),$$

la condition logique inverse étant notée Not_ON dans ce qui suit.

Après le démarrage du système d'alimentation 10, c'est-à-dire lorsque le signal d'état ON est validé, les moyens de commande 14 sont propres lors d'une disparition de la tension d'entrée $V_l$ délivrée par le réseau d'alimentation $R_l$ sélectionné, à commander le passage de l'état F(l) correspondant à un état F(z), l et z étant des nombres entiers respectivement compris entre 1 et N-1 et entre 2 et N, avec l < z, si la condition suivante est vérifiée.

$$E < E_l \quad \text{et} \quad V_z > S_z \qquad (C1)$$

En d'autres termes, les moyens de commande 14 sont propres à commander le basculement d'un premier réseau d'alimentation $R_l$ vers un deuxième réseau d'alimentation $R_z$ associé à un niveau d'énergie $E_z$ inférieur seulement si la quantité d'énergie E est inférieure au niveau d'énergie $E_l$ associé au premier réseau d'alimentation $R_l$ et si le deuxième réseau d'alimentation $R_z$ présente une tension d'entrée $V_z$ supérieure au seuil de tension $S_z$ associé.

Parmi tous les réseaux d'alimentation $R_w$ vérifiant la condition $V_w > S_w$, le réseau d'alimentation $R_z$ associé à un plus haut niveau d'énergie $E_z$ est alors sélectionné. Ainsi, si le réseau d'alimentation $R_{l+1}$ associé à niveau d'énergie $E_{l+1}$ directement inférieur délivre une tension d'entrée $V_{l+1}$ supérieure au seuil de tension $S_{l+1}$ correspondant, ce réseau d'alimentation $R_{l+1}$ est sélectionné.

En outre, lorsque le signal d'état ON est validé, les moyens de commande 14 commandent le passage du système d'alimentation 10 d'un état F(r) à un état F(m), où r et m sont des nombres entiers compris entre 1 et N et m < r, si la condition suivante est vérifiée :

$$E = E_{max} \quad \text{et} \quad V_m > S_m \qquad (C2)$$

Autrement dit, les moyens de commande 14 sont propres à commander le basculement d'un premier réseau d'alimentation $R_f$ à un second réseau d'alimentation $R_m$ associé à niveau d'énergie $E_m$ supérieur seulement si la quantité d'énergie E des moyens de stockage d'énergie 18 est égale à la capacité maximale de stockage $E_{max}$ et si la tension d'entrée $V_m$ délivrée par le second réseau d'alimentation $R_m$ est supérieure au seuil de tension $S_m$ correspondant.

Parmi tous les réseaux d'alimentation $R_x$ vérifiant la condition $V_x > S_x$, le réseau d'alimentation $R_m$ associé à niveau d'énergie $E_m$ maximal est alors sélectionné. Ainsi, si le réseau d'alimentation $R_1$ de niveau d'énergie $E_1$ maximal parmi tous les niveaux d'énergie $E_1$, ..., $E_N$ délivre une tension d'entrée supérieure au seuil de tension $S_1$ correspondant, ce réseau d'alimentation $R_1$ est sélectionné.

Les deux conditions de basculement C1 et C2 portant à la fois sur la disponibilité des réseaux d'alimentation $R_1$, ..., $R_N$ et sur la quantité d'énergie E des moyens de stockage d'énergie 18 permettent de supprimer le basculement intempestif entre les réseaux d'alimentation $R_1$, ..., $R_N$.

La condition C1 permet de supprimer le basculement intempestif lors de microcoupures se produisant sur la tension d'entrée du réseau $R_i$ sélectionné.

La condition C2 permet de supprimer le basculement intempestif lors de la réapparition d'un réseau d'alimentation prioritaire par rapport au réseau d'alimentation $R_i$ sélectionné. Ces deux conditions s'appliquent sur n'importe quel réseau d'alimentation $R_1$, ..., $R_N$.

Ceci permet ainsi de diminuer le nombre de commutations entre les réseaux d'alimentation $R_1$, ..., $R_N$ et d'éviter de générer des instabilités et des perturbations des réseaux d'alimentation du fait des commutations intempestives, mais aussi d'augmenter la durée de vie des organes du système d'alimentation 10 selon l'invention. En effet, dans l'état de la technique, en cas de microcoupures successives très nombreuses, les commutations entre les réseaux sont elles aussi très nombreuses, ce qui entraîne d'importantes variations des courants consommés. Ceci tend à provoquer des instabilités de tous les équipements alimentés via le réseau d'alimentation Ri.

En outre, l'ordre de priorité entre les réseaux d'alimentation $R_1$, ..., $R_N$ et la durée de la microcoupure devant être tenue par chaque réseau $R_1$, ..., $R_N$ sont paramétrables via le choix des valeurs de niveaux prédéterminés d'énergie $E_1$, ..., $E_N$ et de transparences t(1), ..., t(N). Ceci permet notamment d'adapter la logique de sélection d'au plus une source d'énergie à diverses contraintes, telles que des contraintes de vol, des contraintes de configuration matérielle, etc.

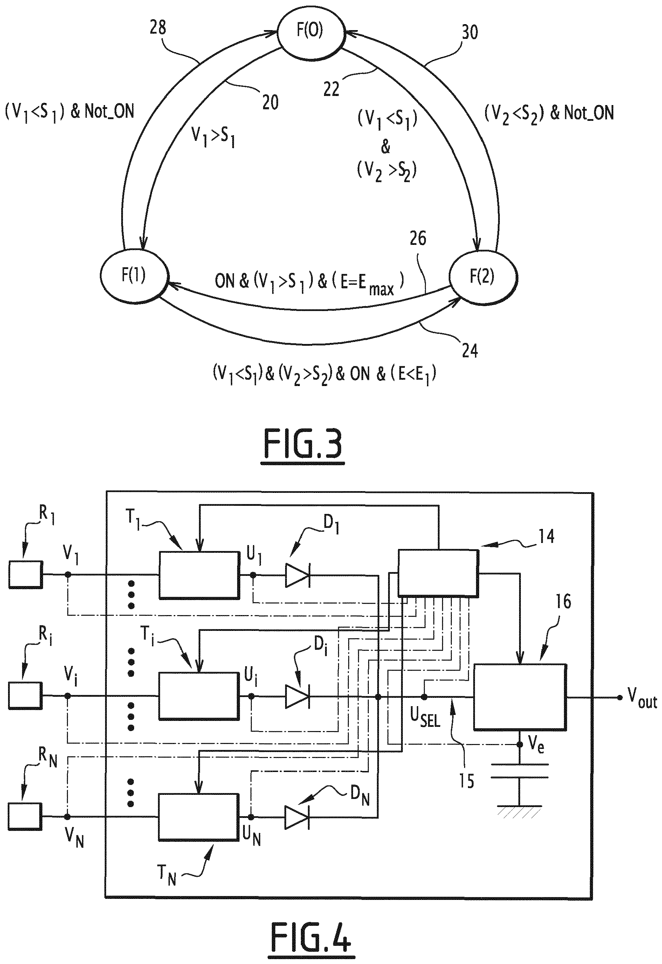

Dans l'exemple de réalisation de la Figure 3, illustrant le cas où N est égal à 2, les moyens de commande 14 sont propres à commander:

- le passage de l'état F(0) à l'état F(1) si ($V_1 > S_1$), (flèche 20),
- le passage de l'état F(0) à l'état F(2) si ($V_1 < S_1$) & ($V_2 > S_2$), (flèche 22),
- le passage de l'état F(1) à l'état F(2) si ($V_1 < S_1$) & ($V_2 > S_2$) & ON & ($E < E_1$), (flèche 24),
- le passage de l'état F(2) à l'état F(1) si ($V_1 > S_1$) & ($E = E_{max}$) & ON, (flèche 26),
- le passage de l'état F(1) à l'état F(0) si ($V_1 < S_1$) & Not_ON, (flèche 28), et
- le passage de l'état F(2) à l'état F(0) si ($V_2 < S_2$) & Not_ON, (flèche 30).

La Figure 4 illustre un deuxième mode de réalisation du système d'alimentation 10 pour lequel les éléments analogues au premier mode de réalisation décrit précédemment sont repérés par des références identiques, et ne sont pas décrits à nouveau.

Selon le deuxième mode de réalisation, les moyens de commande 14 sont propres à détecter et prévenir la propagation à d'autres réseaux d'alimentation de défaillances des organes commandable $T_1$, ..., $T_N$ ou des diodes unidirectionnelles $D_1$, ..., $D_N$ en réalisant la sélection d'au plus une source d'énergie en fonction des N tensions d'entrée $V_1$, .... $V_N$, de la tension de stockage $V_e$, des tensions intermédiaires $U_1$, ..., $U_N$ et de la tension de sélection $U_{SEL}$.

Lorsqu'un réseau d'alimentation $R_i$ donné est sélectionné, pour i nombre entier compris entre 1 et N, les moyens de commande 14 diagnostiquent une défaillance de l'organe commandable $T_i$ associé via une mesure de la tension $U_{SEL}$.

Si la tension $U_{SEL}$ est positive, alors l'organe commandable $T_i$ est en état de marche.

Si la tension $U_{SEL}$ est nulle, alors l'organe commandable $T_i$ comprend au moins un composant en circuit ouvert, et le réseau d'alimentation $R_i$ ne peut donc pas être utilisé pour alimenter le système d'alimentation 10. Dès lors, le réseau d'alimentation $R_i$ correspondant est exclu de l'ensemble des réseaux d'alimentation susceptibles d'être sélectionnés par les moyens de commande 14.

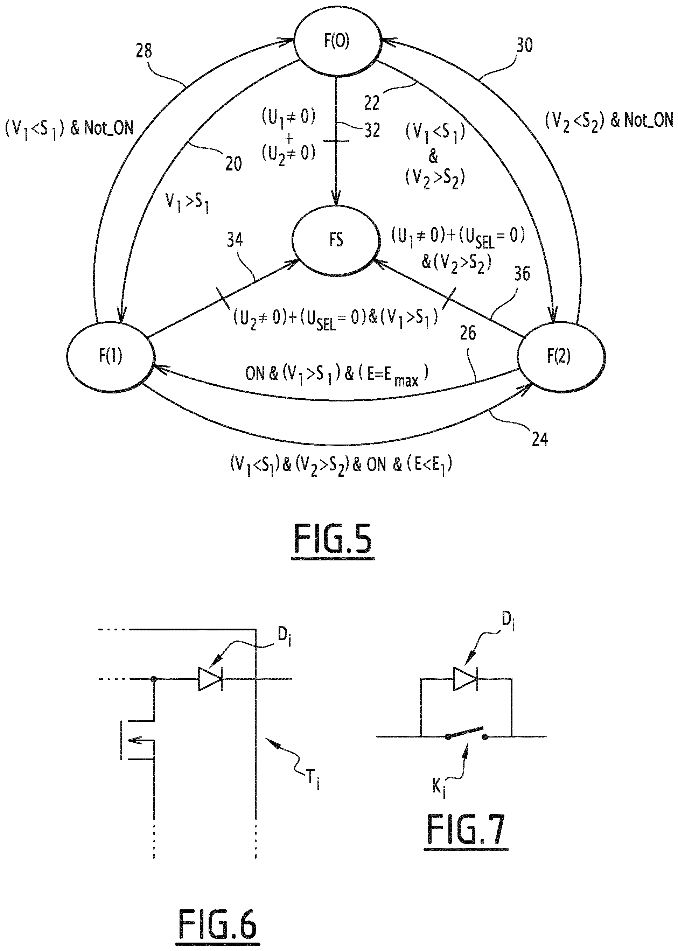

Ceci est par exemple réalisé via une modification de la logique de sélection des moyens de commande 14. L'état F(i) correspondant à la sélection du réseau d'alimentation $R_i$ dont l'organe commandable $T_i$ correspondant est défaillant est alors supprimé de la machine d'état, comme représenté sur la Figure 5, afin d'interdire le basculement vers la sélection de ce réseau.

En complément, lorsqu'un réseau d'alimentation $R_j$ donné est sélectionné, pour j nombre entier compris entre 1 et N, les moyens de commande 14 diagnostiquent le bon fonctionnement des diodes unidirectionnelles $D_1$, ..., $D_N$ via la mesure des tensions intermédiaires $U_1$, ..., $U_N$.

Ainsi, pour tout j entier compris entre 1 et N :

- si la tension $U_j$ est nulle 0, alors la diode unidirectionnelle $D_j$ est en état de marche ; et
- si $U_j$ est positive, alors la diode unidirectionnelle $D_j$ est susceptible d'être court-circuitée, auquel cas les réseaux d'alimentation $R_1$, ..., $R_N$ ne sont plus isolés électriquement les uns des autres.

Dès lors, seul le réseau d'alimentation $R_j$, dont la diode unidirectionnelle $D_j$ est défaillante, est sélectionnable par les moyens de commande 14, les autres réseaux d'alimentation devant être maintenus isolés de ce réseau. Si la disponibilité du système d'alimentation 10 n'est pas un critère prédominant, les moyens de commande 14 commandent la sélection d'aucune source d'énergie, comme on le verra par la suite.

Le fonctionnement du système d'alimentation 10 selon le deuxième mode de réalisation de l'invention va maintenant être décrit plus en détail.

En plus des N+1 états du système d'alimentation 10 précités est défini un état supplémentaire FS (de l'anglais « Fail Safe »), dans lequel tous les organes commandables $T_1$, ..., $T_N$ sont commandés en position ouverte, leur commande en position fermée étant en outre inhibée.

Les moyens de commande 14 sont adaptés pour inhiber le passage du système d'alimentation depuis l'état FS à un état F(e) quelconque, e étant un entier compris entre 0 et N, à la différence de ce qui précède concernant l'état F(0) susceptible de basculer vers un autre état.

Dans le deuxième mode de réalisation, les moyens de commande 14 sont propres à commander :

- le basculement depuis l'état F(0) vers l'état FS s'il existe un nombre entier q compris entre 1 et N tel que $U_q \neq 0$, c'est-à-dire si l'une des tensions intermédiaires $U_1$, ..., $U_N$ est non nulle, et
- le basculement d'un état F(h) donné, h étant un entier compris entre 1 et N, vers l'état FS si il existe un nombre entier g compris entre 1 et N et différent de h tel que $U_g \neq 0$ ou bien si les conditions $U_{SEL} = 0$ et $V_h > S_h$ sont vérifiées, c'est-à-dire si au moins un organe commandable $T_g$ autre que l'organe commandable $T_h$ associé au réseau d'alimentation $R_h$ sélectionné présente une tension intermédiaire $U_g$ non nulle ou bien si la tension de sélection $U_{SEL}$ est nulle alors que la tension d'entrée $V_h$ du réseau d'alimentation $R_h$ est supérieure au seuil de tension $S_h$ associé.

Dans l'exemple de réalisation de la Figure 5, illustrant le cas où N est égal à 2, les moyens de commande 14 commandent, en plus des passages entre les états précédemment décrits à l'aide de la Figure 3, les passages suivants :

- le passage de l'état F(0) à l'état FS si $(U_1 \neq 0)$ ou $(U_2 \neq 0)$, (flèche 32) ;
- le passage de l'état F(1) à l'état FS si $(U_2 \neq 0)$ ou $(U_{SEL} = 0)$ et $(V_1 > S_1)$, (flèche 34) ; et
- le passage de l'état F(2) à l'état FS si $(U_1 \neq 0)$ ou $(U_{SEL} = 0)$ et $(V_2 > S_2)$ (flèche 36).

La logique de basculement entre les réseaux d'alimentation implémentée dans ce mode de réalisation permet notamment de renforcer l'isolation électrique entre les réseaux d'alimentation $R_1$, ..., $R_N$, notamment en cas de pannes d'organes du système d'alimentation 10. Ce mode de réalisation est donc préférentiellement utilisé pour augmenter la sécurité du système d'alimentation 10.

Selon une variante, non représentée et mise en oeuvre avantageusement lorsque la disponibilité du système d'alimentation 10 est une contrainte importante, les moyens de commande 14 commandent le passage du système d'alimentation 10 à un état F(p), p étant un nombre entier compris entre 1 et N, si la condition $U_p \neq 0$ est vérifiée alors que la condition $U_f = 0$ est vérifiée pour tout nombre entier f compris entre 1 et N et différent de p.

Cette logique de basculement permet d'isoler électriquement les réseaux d'alimentation d'un réseau d'alimentation $R_i$ dont la diode unidirectionnelle $D_i$ correspondante est potentiellement défaillante tout en assurant le fonctionnement du système d'alimentation 10 dans des conditions dégradées.

En outre, les moyens de commande 14 inhibent le passage du système d'alimentation 10 vers tout état F(x), x étant un nombre compris entre 1 et N, dans lequel les conditions $U_{SEL} = 0$ et $V_x > S_x$ sont vérifiées.

La Figure 6 illustre un troisième mode de réalisation du système d'alimentation 10 pour lequel les éléments analogues au premier mode de réalisation décrit précédemment sont repérés par des références identiques, et ne sont pas décrits à nouveau.

Selon le troisième mode de réalisation, au moins un organe commandable $T_i$ du système d'alimentation 10 comprend un convertisseur d'énergie comportant la diode unidirectionnelle $D_j$. Ledit convertisseur est par exemple un redresseur.

La Figure 7 illustre un quatrième mode de réalisation du système d'alimentation 10 pour lequel les éléments analogues au premier mode de réalisation décrit précédemment sont repérés par des références identiques, et ne sont pas décrits à nouveau.

Selon le quatrième mode de réalisation, au moins une diode unidirectionnelle $D_i$ est disposée en parallèle d'un interrupteur $K_i$, la ou chaque diode $D_i$ étant intrinsèque ou rapportée audit interrupteur $K_i$. Les moyens de commande 14 sont alors propres à commander en position ouverte ou fermée lesdits interrupteurs $K_i$.

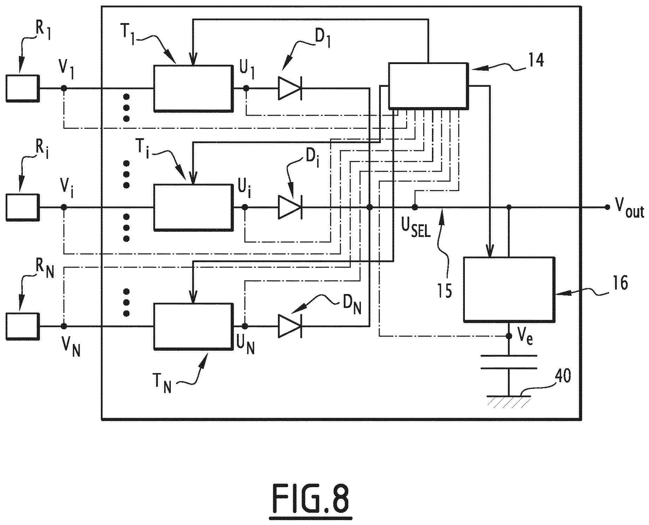

La Figure 8 illustre un cinquième mode de réalisation du système d'alimentation 10 pour lequel les éléments analogues au premier mode de réalisation décrit précédemment sont repérés par des références identiques, et ne sont pas décrits à nouveau.

Selon le cinquième mode de réalisation, tous les organes commandables $T_1$, ..., $T_N$ sont des convertisseurs propres à convertir la tension d'entrée $V_1$, ..., $V_N$ correspondante en la tension de sortie $V_{out}$ du système d'alimentation 10. L'association d'un convertisseur de puissance à chaque réseau d'alimentation $R_1$, ..., $R_N$ permet notamment de limiter les consommations d'énergie sur les réseaux d'alimentation $R_1$, ..., $R_N$ non sélectionnés.

La ligne d'alimentation commune 15 forme un réseau de sortie du système d'alimentation 10.

Les moyens de commande 14 sont alors propres à commander les convertisseurs de puissance $T_1$, ..., $T_N$ à la fois pour la sélection d'au plus une source d'énergie parmi les N réseaux d'alimentation $R_1$, ..., $R_N$ et pour la régulation de la tension intermédiaire $U_i$ à partir de la tension d'entrée $V_i$, la tension de sortie $V_{out}$ étant alors égale à la tension intermédiaire $U_i$.

Dans ce cinquième mode de réalisation, le convertisseur d'énergie 16 est dédié à la conversion d'énergie électrique en provenance et à destination des moyens de stockage d'énergie 18. Il est alors raccordé au réseau de sortie du système d'alimentation 10 et est monté en série avec les moyens de stockage d'énergie 18 entre la ligne d'alimentation commune 15 et une masse électrique 40.

En variante non représentée, certaines charges imposent au système d'alimentation 10 de commander le basculement du réseau sélectionné $R_v$ vers un réseau redondant $R_w$, v et w étant des entiers compris entre 1 et N, en cas de disparition de la tension d'entrée $V_v$ pour une durée supérieure à une durée de temporisation $t_{temp}$ définie. Cela permet de disposer d'une transparence t(i) indépendante de la puissance délivrée par le réseau d'alimentation $R_v$ et de mesurer le vieillissement des moyens de stockage 18. En effet, la vérification de la condition E=E(w) lors d'une disparition de la tension d'entrée $V_v$ pour une durée inférieure à la durée de temporisation $t_{temp}$ indique alors que les moyens de stockage d'énergie 18 ont vieilli.

Si la transparence t(v) du réseau d'alimentation $R_v$ est supérieure à la durée de temporisation $t_{temp}$, le basculement du réseau d'alimentation $R_v$ vers un autre réseau d'alimentation est autorisé pour chaque disparition de la tension d'entrée $V_v$ présentant une durée supérieure à la transparence t(v). Toutefois, afin d'éviter les problèmes survenant lors de microcoupures successives et résolus selon l'invention par implémentation des niveaux d'énergie Ei, cette condition additionnelle de basculement portant sur la durée de temporisation $t_{temp}$ doit tenir compte de la somme cumulée des durées des microcoupures intervenues sur le réseau d'alimentation $R_v$, le basculement entre réseaux d'alimentation étant commandé par les moyens de commande 14 de façon conforme au premier mode de réalisation de l'invention.

A cet effet, la somme cumulée des durées des microcoupures vue par la durée de temporisation $t_{temp}$

est mémorisée par un compteur configurable de sorte que la somme cumulée mémorisée soit remise à zéro lorsque le niveau d'énergie E atteint Emax. Dans ce cas, la somme cumulée de toutes les microcoupures vue par la durée de temporisation $t_{temp}$ est inférieure à la transparence t(v).

On conçoit que le système d'alimentation 10 selon l'invention permet de limiter le nombre de basculements entre les réseaux.

## Revendications

1. Système d'alimentation (10) propre à délivrer en sortie une tension de sortie ($V_{out}$) continue et à être raccordé en entrée à N réseaux d'alimentation ($R_1$, ... , $R_N$) distincts délivrant chacun une tension d'entrée ($V_1$, ..., $V_N$), N étant un nombre entier supérieur ou égal à 2, du type comportant N organes commandables de transfert d'énergie ($T_1$, ..., $T_N$), chacun étant propre à commuter entre une position ouverte et une position fermée et étant connecté à un réseau d'alimentation ($R_1$, .... $R_N$) correspondant, des moyens (14) de commande de chacun des organes commandables de transfert d'énergie ($T_1$, ..., $T_N$) pour la sélection d'un réseau d'alimentation ($R_1$, ..., $R_N$) parmi les N réseaux d'alimentation ($R_1$, .... $R_N$) via la commande en position fermée de l'organe commandable de transfert d'énergie ($T_1$, ... , $T_N$) connecté au réseau d'alimentation ($R_1$, ..., $R_N$) sélectionné et la commande en position ouverte des N-1 autre(s) organe(s) commandables de transfert de puissance ($T_1$, ... , $T_N$), et des moyens (18) de stockage d'énergie propres à délivrer une tension de stockage ($V_e$),
   **caractérisé en ce que** le système d'alimentation (10) comprend en outre un convertisseur d'énergie (16) connecté en sortie des N organes commandables de transfert d'énergie ($T_1$, ..., $T_N$), les moyens de commande (14) étant propres à commander le convertisseur d'énergie (16) et les N organes commandables de transfert d'énergie ($T_1$, $T_N$) pour la sélection d'au plus une source d'énergie parmi les N réseaux d'alimentation ($R_1$ ... , $R_N$), en fonction des N tensions d'entrée ($V_1$, ... , $V_N$) et de la tension de stockage ($V_e$).

2. Système d'alimentation selon la revendication 1, **caractérisé en ce que** les moyens de stockage d'énergie (18) présentent une capacité maximale de stockage ($E_{max}$), **en ce que** les réseaux d'alimentation ($R_1$, ..., $R_N$) sont ordonnés suivant des niveaux d'énergie croissants ($E_1$, ..., $E_N$), chaque niveau d'énergie ($E_1$, ..., $E_N$) étant prédéterminé et associé à un réseau d'alimentation correspondant ($R_1$, ..., $R_N$) et présentant une valeur positive inférieure à la capacité maximale de stockage ($E_{max}$), et **en ce que** les moyens de commande (14) sont propres à sélectionner de manière prioritaire le réseau d'alimentation ($R_1$ ... , $R_N$) associé au niveau d'énergie ($E_1$ ..., $E_N$) le plus élevé.

3. Système d'alimentation selon la revendication 2, **caractérisé en ce que** des seuils de tension ($S_1$,...,$S_N$) sont respectivement associés aux réseaux d'alimentation ($R_1$,... , $R_N$), les moyens de commande (14) étant propres à commander le basculement d'un premier réseau d'alimentation ($R_1$ ..., $R_N$) vers un second réseau d'alimentation ($R_1$,... , $R_N$) uniquement si ledit deuxième réseau d'alimentation ($R_1$, ... , $R_N$) présente une tension d'entrée ($V_1$,... , $V_N$) supérieure au seuil de tension ($S_1$, ... , $S_N$) correspondant.

4. Système d'alimentation selon la revendication 2 ou 3, **caractérisé en ce que** la différence entre deux niveaux d'énergie ($E_{u-1}$, $E_u$) successifs correspond à l'énergie fournie par les moyens de stockage d'énergie (18) au convertisseur d'énergie (16) lors de la disparition, pendant une durée de transparence ($t(1)$, ..., $t(n)$) propre à chaque réseau d'alimentation ($R_1$,... , $R_N$), de la tension d'entrée ($V_u$) du réseau d'alimentation ($R_u$) de niveau d'énergie ($E_u$) associé le plus faible desdits deux niveaux d'énergie ($E_{u-1}$, $E_u$).

5. Système d'alimentation selon la revendication 4, **caractérisé en ce que** les moyens de commande (14) sont propres à commander le basculement d'un premier réseau d'alimentation ($R_1$ ... , $R_N$), dont la durée de transparence ($t(1)$, ..., $t(n)$) est supérieure à une durée de temporisation ($t_{temp}$) prédéterminée, à un second réseau d'alimentation ($R_1$, ... , $R_N$) lors d'une disparition de la tension d'entrée ($V_1$, ..., $V_N$) du premier réseau d'alimentation ($R_1$, ..., $R_N$) pour une durée supérieure à la durée de temporisation ($t_{temp}$).

6. Système d'alimentation selon la revendication 3, **caractérisé en ce que** la tension de stockage ($V_e$) est représentative d'une quantité d'énergie ($E$) des moyens de stockage d'énergie (18), et **en ce que** les moyens de commande (14) sont propres à commander le basculement d'un premier réseau d'alimentation ($R_1$, ... , $R_N$) à un deuxième réseau d'alimentation ($R_1$, ... , $R_N$) de niveau d'énergie ($E_1$, ..., $E_N$) associé inférieur, lors d'une disparition de la tension d'entrée ($V_1$, ..., $V_N$) dudit premier réseau d'alimentation ($R_1$, ... , $R_N$) , uniquement si la quantité d'énergie ($E$) des moyens (18) de stockage d'énergie est inférieure au niveau d'énergie ($E_1$, ..., $E_N$) associé audit premier réseau d'alimentation ($R_1$, ... ,$R_N$).

7. Système d'alimentation selon la revendication 3 ou 6, **caractérisé en ce que** les moyens de commande (14) sont propres à commander le basculement d'un premier réseau d'alimentation ($R_1$, ... , $R_N$) à un second réseau d'alimentation ($R_1$, ... , $R_N$) de niveau d'énergie ($E_1$, ..., $E_N$) supérieur uniquement si la quantité d'énergie ($E$) des moyens de stockage d'énergie (18) est égale à la capacité maximale de stockage ($E_{max}$).

8. Système d'alimentation selon l'une quelconque des revendications précédentes, **caractérisé en ce que** les moyens de commande (14) sont propres à commander la sélection d'aucune source d'énergie via la commande de tous les organes commandables de transfert d'énergie ($T_1$, ..., $T_N$) en position ouverte.

9. Système d'alimentation selon la revendication 8, **caractérisé en ce que** les moyens de stockage d'énergie (18) présentent une capacité maximale de stockage ($E_{max}$), les moyens de commande (14) étant propres à inhiber le basculement d'un premier réseau d'alimentation ($R_1$, ... , $R_N$), vers lequel le basculement a été commandé depuis la sélection d'aucune source d'énergie, vers un second réseau d'alimentation ($R_1$, ..., $R_N$) tant que la quantité d'énergie ($E$) des moyens de stockage d'énergie (18) n'est pas égale à la capacité maximale de stockage ($E_{max}$).

10. Système d'alimentation selon la revendication 8, **caractérisé en ce qu'**il comprend également une ligne d'alimentation commune (15) présentant une tension de sélection ($U_{SEL}$)**, en ce que** les organes commandables de transfert d'énergie ($T_1$, ..., $T_N$) sont raccordés à la ligne d'alimentation commune (15), et **en ce que** les moyens de commande (14) sont propres à commander le convertisseur d'énergie (16) et les N organes commandables de transfert d'énergie ($T_1$, ..., $T_N$) pour la sélection d'au plus une source d'énergie parmi les N réseaux d'alimentation ($R_1$, ... , $R_N$), en fonction des N tensions d'entrée ($V_1$, ... , $V_N$), de la tension de stockage ($V_e$), de tensions intermédiaires ($U_1$, ... , $U_N$) délivrées par les organes commandables de transfert d'énergie ($T_1$, ..., $T_N$) et de la tension de sélection ($U_{SEL}$).

11. Système d'alimentation selon la revendication 10, **caractérisé en ce que** les moyens de commande (14) sont propres à commander le basculement vers un état sécurisé (FS) du réseau d'alimentation (10) dans lequel les organes commandables de transfert d'énergie ($T_1$, ..., $T_N$) sont tous commandés en position ouverte, leur commande en position fermée étant inhibée.

12. Système d'alimentation selon la revendication 11, **caractérisé en ce que** les moyens de commande (14) sont propres à commander le basculement depuis la sélection d'aucune source d'énergie vers l'état sécurisé (FS) si au moins une tension intermédiaire ($U_1$, ... , $U_N$) est non nulle.

**13.** Système d'alimentation selon la revendication 11 ou 12, **caractérisée en ce que** des seuils de tension $(S_1, ..., S_N)$ sont respectivement associés aux réseaux d'alimentation $(R_1, ... , R_N)$, les moyens (14) de commutation/sélection étant propres à commander le basculement d'un réseau d'alimentation $(R_1, ..., R_N)$ vers l'état sécurisé (FS) si au moins un organe commandable de transfert d'énergie $(T_1, ..., T_N)$ autre que l'organe commandable de transfert de puissance $(T_1, ..., T_N)$ associé audit réseau d'alimentation $(R_1, ... , R_N)$ présente une tension intermédiaire $(U_1, ..., U_N)$ non nulle ou si la tension de sélection $(U_{SEL})$ est nulle alors que la tension d'entrée $(V_1, ..., V_N)$ dudit réseau d'alimentation $(R_1, ..., R_N)$ est supérieure au seuil de tension $(S_1, ... , S_N)$ associé.

**14.** Système d'alimentation selon l'une quelconque des revendications précédentes, **caractérisé en ce qu'**il comprend également une ligne d'alimentation commune (15) à laquelle sont raccordés les organes commandables de transfert d'énergie $(T_1, .... T_N)$, et **en ce qu'**il comprend N diodes unidirectionnelles $(D_1, ..., D_N)$ connectées respectivement entre la sortie d'un organe commandable de transfert d'énergie $(T_1, ..., T_N)$ donné et la ligne d'alimentation commune (15).

**Patentansprüche**

**1.** Energieversorgungssystem (10), geeignet, eine Ausgangsgleichspannung $(V_{out})$ am Ausgang zu liefern und am Eingang mit N unterschiedlichen Energieversorgungsnetzwerken $(R_1, ..., R_N)$ verbunden zu werden, von denen jedes eine Eingangsspannung $(V_1, ..., V_N)$ liefert, wobei N eine ganze Zahl größer oder gleich 2 ist, vom Typ, der N steuerbare Energieübertragungseinheiten $(T_1, ..., T_N)$, von denen jede geeignet ist, zwischen einer offenen Position und einer geschlossenen Position umzuschalten und mit einem entsprechenden Energieversorgungsnetzwerk $(R_1, ..., R_N)$ verbunden zu werden, Mittel (14) zum Steuern jeder der steuerbaren Energieübertragungseinheiten $(T_1, ..., T_N)$ für die Auswahl eines Energieversorgungsnetzwerks $(R_1, ..., R_N)$ unter den N Energieversorgungsnetzwerken $(R_1, ..., R_N)$ über den Befehl der steuerbaren Energieübertragungseinheit $(T_1, ..., T_N)$, die mit dem ausgewählten Energieversorgungsnetzwerk $(R_1, ..., R_N)$ verbunden ist, in den geschlossenen Zustand und den Befehl der(s) N-1 anderen steuerbare(n) Energieübertragungseinheit(en) $(T_1, ..., T_N)$ in den offenen Zustand und Mittel zum Speichern von Energie (18) aufweist, die dazu geeignet sind, eine Speicherspannung $(V_e)$ zu liefern, dadurch charakterisiert, dass das Energieversorgungssystem (10) außerdem einen Energiewandler (16) aufweist, der mit dem Ausgang der N steuerbaren Energieübertragungseinheiten $(T_1, ..., T_N)$ verbunden ist, wobei die Steuermittel (14) geeignet sind, den Energiewandler (16) und die N steuerbaren Energieübertragungseinheiten $(T_1, ..., T_N)$ für die Auswahl von höchstens einer Energiequelle unter den N Energieversorgungsnetzwerken $(R_1, ..., R_N)$ in Abhängigkeit der N Eingangsspannungen $(V_1, ..., V_N)$ und der Speicherspannung $(V_e)$ zu steuern.

**2.** Energieversorgungssystem gemäß Anspruch 1, dadurch charakterisiert, dass die Mittel zum Speichern von Energie (18) eine maximale Speicherkapazität $(E_{max})$ haben, dadurch, dass die Energieversorgungsnetzwerke $(R_1, ..., R_N)$ gemäß ansteigenden Energieniveaus $(E_1, ..., E_N)$ angeordnet sind, wobei jedes Energieniveau $(E_1, ..., E_N)$ vorgegeben ist und mit einem entsprechenden Energieversorgungsnetzwerk $(R_1, ..., R_N)$ assoziiert ist und einen positiven Wert aufweist, der geringer ist als die maximale Speicherkapazität $(E_{max})$, und dadurch, dass die Steuermittel (14) geeignet sind, mit Priorität das Energieversorgungsnetzwerk $(R_1, ..., R_N)$ auszuwählen, das mit dem Energieniveau $(E_1, ..., E_N)$ assoziiert ist, das am höchsten ist.

**3.** Energieversorgungssystem gemäß Anspruch 2, dadurch charakterisiert, dass Spannungsschwellwerte $(S_1, ..., S_N)$ jeweils mit den Energieversorgungsnetzwerken $(R_1, ..., R_N)$ assoziiert sind, wobei die Steuermittel (14) geeignet sind, das Umschwenken von einem ersten Energieversorgungsnetzwerk $(R_1, ..., R_N)$ zu einem zweiten Energieversorgungsnetzwerk $(R_1, ..., R_N)$ nur zu befehlen, wenn das zweite Energieversorgungsnetzwerk $(R_1, ..., R_N)$ eine Eingangsspannung $(V_1, ..., V_N)$ aufweist, die größer ist als der entsprechende Spannungsschwellwert $(S_1, ..., S_N)$.

**4.** Energieversorgungssystem gemäß Anspruch 2 oder 3, dadurch charakterisiert, dass der Unterschied zwischen zwei aufeinanderfolgenden Energieniveaus $(E_{u-1}, E_u)$ einer Energie entspricht, die von den Mitteln zum Speichern von Energie (18) dem Energiewandler (16) bei dem Wegfall, während einer Transparenzdauer $(t(1), ..., t(n))$, zugehörig zu jedem Energieversorgungsnetzwerk $(R_1, ..., R_N)$, der Eingangsspannung $(V_u)$ des Energieversorgungsnetzwerks $(R_u)$ mit dem assoziierten Energieniveau $(E_u)$ der zwei Energieniveaus $(E_{u-1}, E_u)$, das am schwächsten ist, bereitgestellt wird.

**5.** Energieversorgungssystem gemäß Anspruch 4, dadurch charakterisiert, dass die Steuermittel (14) geeignet sind, das Umschwenken von einem ersten Energieversorgungsnetzwerk $(R_1, ..., R_N)$, dessen Transparenzdauer $(t(1), ..., t(n))$ größer ist als eine

vorgegebene Verzögerungszeit ($T_{temp}$), zu einem zweiten Energieversorgungsnetzwerk ($R_1$, ..., $R_N$) bei einem Wegfall der Eingangsspannung ($V_1$, ..., $V_N$) des ersten Energieversorgungsnetzwerks ($R_1$, ..., $R_N$) für eine Zeitdauer, die größer ist als die Verzögerungszeit ($T_{temp}$), zu befehlen.

6.  Energieversorgungssystem gemäß Anspruch 3, dadurch charakterisiert, dass die Speicherspannung ($V_e$) repräsentativ ist für eine Energiemenge (E) der Mittel zum Speichern von Energie (E), und dadurch, dass die Steuermittel (14) geeignet sind, das Umschwenken von einem ersten Energieversorgungsnetzwerk ($R_1$, ..., $R_N$) zu einem zweiten Energieversorgungsnetzwerk ($R_1$, ..., $R_N$) mit einem geringeren assoziierten Energieniveau ($E_1$, ..., $E_N$) bei einem Wegfall der Eingangsspannung ($V_1$, ..., $V_N$) des ersten Energieversorgungsnetzwerks ($R_1$, ..., $R_N$) nur zu befehlen, wenn die Energiemenge (E) der Mittel zum Speichern von Energie (18) geringer ist als das Energieniveau ($E_1$, ..., $E_N$), das mit dem ersten Energieversorgungsnetzwerk ($R_1$, ..., $R_N$) assoziiert ist.

7.  Energieversorgungssystem gemäß Anspruch 3 oder 6, dadurch charakterisiert, die Steuermittel (14) geeignet sind, das Umschwenken von einem ersten Energieversorgungsnetzwerk ($R_1$, ..., $R_N$) zu einem zweiten Energieversorgungsnetzwerk ($R_1$, ..., $R_N$) mit einem höheren assoziierten Energieniveau ($E_1$, ..., $E_N$) nur zu befehlen, wenn die Energiemenge (E) der Mittel zum Speichern von Energie (18) gleich der maximalen Speicherkapazität ($E_{max}$) ist.

8.  Energieversorgungssystem gemäß einem der vorhergehenden Ansprüche, dadurch charakterisiert, dass die Steuermittel (14) geeignet sind, die Auswahl jeglicher Energiequelle über den Befehl aller steuerbaren Energieübertragungseinheiten ($T_1$, ..., $T_N$) in den offenen Zustand zu befehlen.

9.  Energieversorgungssystem gemäß Anspruch 8, dadurch charakterisiert, dass die Mittel zum Speichern von Energie (18) eine maximalen Speicherkapazität ($E_{max}$) haben, wobei die Steuermittel (14) geeignet sind, das Umschwenken eines ersten Energieversorgungsnetzwerks ($R_1$, ..., $R_N$), zu dem das Umschwenken seit der Auswahl irgendeiner Energiequelle befohlen wurde, zu einem zweiten Energieversorgungsnetzwerk ($R_1$, ..., $R_N$) zu verhindern, solange die Energiemenge (E) der Mittel zum Speichern von Energie (18) nicht gleich der maximalen Speicherkapazität ($E_{max}$) ist.

10. Energieversorgungssystem gemäß Anspruch 8, dadurch charakterisiert, dass es auch eine gemeinsame Energieversorgungsleitung (15) aufweist, die eine Auswahlspannung ($U_{SEL}$) aufweist, dadurch, dass die steuerbaren Energieübertragungseinheiten ($T_1$, ..., $T_N$) mit der gemeinsamen Energieversorgungsleitung (15) verbunden sind und dadurch, dass die Steuermittel (14) geeignet sind, den Energiewandler (16) und die N steuerbaren Energieübertragungseinheiten ($T_1$, ..., $T_N$) für die Auswahl von höchstens einer Energiequelle unter den N Energieversorgungsnetzwerken ($R_1$, ..., $R_N$) in Abhängigkeit der N Eingangsspannungen ($V_1$, ..., $V_N$), der Speicherspannung ($V_e$), von den steuerbaren Energieübertragungseinheiten ($T_1$, ..., $T_N$) gelieferten Zwischenspannungen ($U_1$, ..., $U_N$) und der Auswahlspannung ($U_{SEL}$) zu steuern.

11. Energieversorgungssystem gemäß Anspruch 10, dadurch charakterisiert, dass die Steuermittel (14) geeignet sind, das Umschwenken in einen gesicherten Zustand (FS) des Versorgungsnetzwerks (10) zu befehlen, in dem die steuerbaren Energieübertragungseinheiten ($T_1$, ..., $T_N$) alle in die offene Position befohlen sind, wobei ihr Befehl in den geschlossenen Zustand verhindert wird.

12. Energieversorgungssystem gemäß Anspruch 11, dadurch charakterisiert, dass die Steuermittel (14) geeignet sind, das Umschwenken seit der Auswahl irgendeiner Energiequelle in den gesicherten Zustand (FS) zu befehlen, falls mindestens eine Zwischenspannung ($U_1$, ..., $U_N$) nicht Null ist.

13. Energieversorgungssystem gemäß Anspruch 11 oder 12, dadurch charakterisiert, dass die Spannungsschwellwerte ($S_1$, ..., $S_N$) jeweils mit den Energieversorgungsnetzwerken ($R_1$, ..., $R_N$) assoziiert sind, wobei die Mittel (14) zum Schalten/Auswählen geeignet sind, das Umschalten eines Energieversorgungsnetzwerks ($R_1$, ..., $R_N$) in den gesicherten Zustand (FS) umzuschalten, wenn mindestens eine steuerbare Energieübertragungseinheit ($T_1$, ..., $T_N$) außer der steuerbaren Leistungsübertragungseinheit ($T_1$, ..., $T_N$), die mit dem Energieversorgungsnetzwerk ($R_1$, ..., $R_N$) assoziiert ist, eine Zwischenspannung ($U_1$, ..., $U_N$) aufweist, die nicht Null ist, oder wenn die Auswahlspannung ($U_{SEL}$) Null ist, obwohl die Eingangsspannung ($V_1$, ..., $V_N$) des Energieversorgungsnetzwerks ($R_1$, ..., $R_N$) größer ist als der assoziierte Spannungsschwellwert ($S_1$, ..., $S_N$).

14. Energieversorgungssystem gemäß einem der vorhergehenden Ansprüche, dadurch charakterisiert, dass es auch eine gemeinsame Energieversorgungsleitung (15) aufweist, mit der die steuerbaren Energieübertragungseinheiten ($T_1$, ..., $T_N$) verbunden sind und dadurch, dass es N unidirektionale Dioden ($D_1$, ..., $D_N$) aufweist, die jeweils zwischen den Ausgang einer gegebenen steuerbaren Energieübertragungseinheit ($T_1$, ..., $T_N$) und die gemeinsame Energieversorgungsleitung (15) geschaltet sind.

## Claims

1. A power supply system (10) capable of delivering a DC output voltage ($V_{out}$) and of being connected in input to N distinct power supply networks ($R_1$, ..., $R_N$) each delivering an input voltage ($V_1$, ..., $V_N$), N being an integer greater than or equal to 2, of the type comprising:

   - N controllable energy transfer members ($T_1$, ..., $T_N$), each capable of switching between an open position and a closed position and being connected to a corresponding power supply network ($R_1$, ..., $R_N$),
   - control means (14) for each of the controllable energy transfer members ($T_1$, ..., $T_N$) for selecting one power supply network ($R_1$; ..., $R_N$) from among the N power supply networks ($R_1$, ..., $R_N$) by commanding the controllable energy transfer member ($T_1$, ..., $T_N$) connected to the selected power supply system ($R_1$, ..., $R_N$) into the closed position and commanding the N-1 other controllable power transfer member(s) into the open position ($T_1$, ..., $T_N$), and
   - energy storage means (18) capable of delivering a storage voltage ($V_e$),

   **characterized in that** the power supply system (10) also comprises an energy converter (16) connected to the output of the N controllable energy transfer members ($T_1$, ..., $T_N$), the control means (14) being adapted to control the energy converter and the N controllable energy transfer members ($T_1$, ..., $T_N$) to select at most one energy source from among the N power supply networks ($R_1$, ..., $R_N$), as a function of the N input voltages ($V_1$, ..., $V_N$) and the storage voltage ($V_e$).

2. The power supply system according to claim 1, **characterized in that** the energy storage means (18) have a maximum storage capacity ($E_{max}$), **in that** the power supply networks ($R_1$..., $R_N$) are ordered by increasing energy levels ($E_1$ ..., $E_N$), each energy level ($E_1$, ..., $E_N$) being predetermined and associated with the corresponding power supply network ($R_1$; ..., $R_N$) and having a positive value below the maximum storage capacity ($E_{max}$), and **in that** the control means (14) are adapted to select, as a priority, the power supply network ($R_1$, ..., $R_N$) associated with the highest energy level ($E_1$, ..., $E_N$).

3. The power supply system according to claim 2, **characterized in that** voltage thresholds ($S_1$, ..., $S_N$) are respectively associated with the power supply networks ($R_1$, ... $R_N$), the control means (14) being capable of controlling the switching from a first power supply network ($R_1$, ..., $R_N$) to a second power supply network ($R_1$, ..., $R_N$) only if said second power supply network ($R_1$, ..., $R_N$) has an input voltage ($V_1$, ..., $V_N$) higher than the corresponding voltage threshold ($S_1$, ..., $S_N$).

4. The power supply system according to claim 2 or 3, **characterized in that** the difference between two successive energy levels ($E_{u-1}$, $E_u$) corresponds to the energy supplied by the energy storage means (18) to the energy converter (16) during the disappearance, for a transparency duration ($t(1)$, ..., $t(n)$) unique to each power supply network ($R_1$, ..., $R_N$), of the input voltage ($V_u$) of the power supply network ($R_u$) with the lowest associated energy level ($E_u$) of said two energy levels ($E_{u-1}$, $E_u$).

5. The power supply system according to claim 4, **characterized in that** the control means (14) are adapted to command the switch from a first power supply network ($R_1$, ..., $R_N$), the transparency duration ($t(1)$, ..., $t(n)$) of which is longer than a predetermined delay period ($t_{temp}$), to a second power supply network ($R_1$, ..., $R_N$) during a disappearance of the input voltage ($V_1$, ..., $V_N$) of the first power supply network ($R_1$, ..., $R_N$) for a duration longer than the delay period ($t_{temp}$).

6. The power supply system according to claim 3, **characterized in that** the storage voltage ($V_e$) is representative of a quantity of energy (E) of the energy storage means (18), and **in that** the control means (14) can command the switch from a first power supply network ($R_1$, ..., $R_N$) to a second power supply network ($R_1$, ..., $R_N$) with a lower associated energy level ($E_1$, ..., $E_N$), during a disappearance of the input voltage ($V_1$, ..., $V_N$) of said first power supply network ($R_1$, ..., $R_N$), only if the quantity of energy (E) of the energy storage means (18) is lower than the energy level ($E_1$, ..., $E_N$) associated with said first power supply network ($R_1$, ..., $R_N$).

7. The power supply system according to claim 3 or 6, **characterized in that** the control means (14) are adapted to command the switch from a first power supply network ($R_1$, ..., $R_N$) to a second power supply network ($R_1$, ..., $R_N$) with a higher energy level ($E_1$, ..., $E_N$) only if the amount of energy (E) of the energy storage means (18) is equal to the maximum storage capacity ($E_{max}$).

8. The power supply system according to any one of the preceding claims, **characterized in that** the control means (14) are adapted to command the selection of no energy source by commanding all of the controllable energy transfer members ($T_1$, ..., $T_N$) into the open position.

9. The power supply system according to claim 8, **characterized in that** the energy storage means (18) have a maximum storage capacity ($E_{max}$), the control means (14) being able to inhibit the switch from a first power supply network ($R_1$, ..., $R_N$), toward which switching was commanded from the selection of no energy source, to a second power supply network ($R_1$, ..., $R_N$) as long as the quantity of energy ($E$) of the energy storage means (18) is not equal to the maximum storage capacity ($E_{max}$).

10. The power supply system according to claim 8, **characterized in that** it also comprises a shared power supply line (15) having a selection voltage ($U_{SEL}$), **in that** the controllable energy transfer members ($T_1$, ..., $T_N$) are connected to the shared power supply line (15), and **in that** the control means (14) are capable of commanding the energy converter (16) and the N controllable energy transfer members ($T_1$, ..., $T_N$) to select at most one energy source from among the N power supply networks ($R_1$, ..., $R_N$), as a function of the N input voltages ($V_1$, ..., $V_N$), of the storage voltage ($V_e$), of intermediate voltages ($U_1$, ..., $U_N$) delivered by the controllable energy transfer members ($T_1$, ..., $T_N$), and of the selection voltage ($U_{SEL}$).

11. The power supply system according to claim 10, **characterized in that** the control members (14) are adapted to command the switch to a secured state (FS) of the power supply network (10) in which the controllable energy transfer members ($T_1$, ..., $T_N$) are all commanded into the open position, their command into the closed position being inhibited.

12. The power supply system according to claim 11, **characterized in that** the control means (14) are adapted to command the switch from the selection of no energy source to the secured state (FS) if at least one intermediate voltage ($U_1$, ..., $U_N$) is non-zero.

13. The power supply system according to claim 11 or 12, **characterized in that** the voltage thresholds ($S_1$, ..., $S_N$) are respectively associated with the power supply networks ($R_1$, ..., $R_N$), the switching/selection means (14) being adapted to command the switch of a power supply network ($R_1$, ..., $R_N$) to the secured state (FS) if at least one controllable energy transfer member ($T_1$, ..., $T_N$) other than the controllable power transfer member ($T_1$, ..., $T_N$) associated with said power supply network ($R_1$, ..., $R_N$) has a non-zero intermediate voltage ($U_1$, ..., $U_N$) or if the selection voltage ($U_{SEL}$) is zero whereas the input voltage ($V_1$, ..., $V_N$) of said power supply network ($R_1$, ..., $R_N$) is above the associated voltage threshold ($S_1$, ..., $S_N$).

14. The power supply system according to any one of the preceding claims, **characterized in that** it also comprises a shared power supply line (15) to which the controllable energy transfer members are connected ($T_1$, ..., $T_N$), and **in that** the power supply system comprises N unidirectional diodes ($D_1$, ..., $D_N$) respectively connected between the output of the given controllable energy transfer member ($T_1$, ..., $T_N$) and the shared power supply line (15).

FIG.1

Correspond à t(1)   (entre $E_{max}$ et $E_1$)

Correspond à t(2)   (entre $E_1$ et $E_2$)

Correspond à t(N)   (entre $E_{N-1}$ et $E_N$)

FIG.2

**FIG.3**

**FIG.4**

28

$(V_1 < S_1)$ & Not_ON

20

$(U_1 \neq 0)$
+
$(U_2 \neq 0)$

22

32

30

$(V_2 < S_2)$ & Not_ON

$(V_1 < S_1)$
&
$(V_2 > S_2)$

$V_1 > S_1$

F(O)

FS

34

$(U_1 \neq 0) + (U_{SEL} = 0)$
& $(V_2 > S_2)$

36

$(U_2 \neq 0) + (U_{SEL} = 0)$ & $(V_1 > S_1)$

26

F(1)

F(2)

ON & $(V_1 > S_1)$ & $(E = E_{max})$

24

$(V_1 < S_1)$ & $(V_2 > S_2)$ & ON & $(E < E_1)$

## FIG.5

$D_i$

$T_i$

## FIG.6

$D_i$

$K_i$

## FIG.7

## FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2815789 A1